# EUROPÄISCHE PATENTSCHRIFT

(11) **EP 0 609 764 B1**
(45) Veröffentlichungstag und Bekanntmachung des Hinweises auf die Patenterteilung: **02.05.1997**
(21) Anmeldenummer: 94101115.7
(22) Anmeldetag: 26.01.1994
(51) Int. Cl.: C04B 35/10

(54) **Dichtgesinterte, plattenförmige keramische Formteile aus Aluminiumoxid mit verbesserter Temperaturwechselbeständigkeit**
Densely sintered plate like alumina ceramic bodies with improved thermal shock resistance
Produits céramiques denses en alumine frittée en forme de plaque à résistance aux chocs thermiques améliorée

(30) Priorität: 02.02.1993 DE 4302795
(43) Veröffentlichungstag der Anmeldung: 10.08.1994
(73) Patentinhaber: CeramTec AG Innovative Ceramic Engineering, 73207 Plockingen (DE)
(72) Erfinder: Krahn, Wolfgang, Dr., D-95615 Marktredwitz (DE); Ernst, Johannes, Dr., D-95615 Marktredwitz (DE); Drabent, Claudia, D-95689 Fuchsmühl (DE)

(56) Entgegenhaltungen:
- EP-A- 0 281 265
- EP-A- 0 497 241
- US-A- 4 595 665

## Beschreibung

Die Erfindung betrifft dichtgesinterte plattenförmige keramische Formteile aus Aluminiumoxid mit verbesserter Temperaturwechselbeständigkeit und ein Verfahren zu deren Herstellung

Bauteile aus Aluminiumoxidkeramik werden in großem Umfang wegen ihrer besonders günstigen Materialeigenschaften, wie hoher Druck- und Biegefestigkeit, niedriger Wärmeausdehnung, hoher Korrosionsbeständigkeit, hoher Temperaturbeständigkeit, geringem spezifischen Gewicht oder sehr gutem elektrischem Isolationsvermögen in verschiedenen qualitativ hochwertigen Produkten eingesetzt, unter anderem auch als keramische Substrate für elektronische Komponenten und Schaltkreise.

Für den bestimmungsgemäßen Einsatzzweck in elektronischen Anwendungen werden die keramischen Substrate üblicherweise mit anderen Materialien beschichtet, wobei diese anderen Materialien häufig mit dem Substrat fest verbunden werden. Auf diese Weise entstehen Dick- oder Dünnschichtschaltungen sowie metallisierte Substrate durch die Direct-Copper-Bonding-Technik oder durch das Einbrennen refraktärer Metalle. Bei der Herstellung elektronischer Schaltkreise auf dem Keramiksubstrat ist es oft notwendig, das Material verschiedenen aufeinanderfolgenden Wärmebehandlungen auszusetzen. Beschichtungsprozesse selbst, aber auch Trocknungsprozesse, Einbrennprozesse, Lötprozesse, Bondprozesse, Trennprozesse oder mitunter auch Prüfvorgänge für die elektronischen Bauteile können dazu führen, daß die thermische Belastungsgrenze des Keramikmaterials überschritten wird und es zur Ausbildung von Mikrorissen innerhalb der Keramik oder gar zum Bruch kommt.

Zur Realisierung komplexer elektronischer Schaltungen werden zunehmend großflächigere Keramiksubstrate benötigt; bedingt durch die wachsende Bauteilgeometrie nimmt aber bei gleichen Materialeigenschaften die Fehlerwahrscheinlichkeit zu. Gleichzeitig gebietet die Notwendigkeit höherer Produktivität bei der Verarbeitung der Keramiksubstrate eine erhebliche Reduzierung der Durchlaufzeit durch die Fertigungsanlagen. Bei Wärmebehandlungen werden die Materialien oftmals schnelleren und vor allem steileren Temperaturwechseln ausgesetzt, so daß die Anforderungen an die Temperaturwechselbeständigkeit der Keramik außerordentlich gewachsen sind. Schließlich erhöht sich die Integrationsdichte elektronischer Schaltungen ständig. Dies geschieht beispielsweise in der Hybridtechnik durch den Aufbau mehrlagiger Schaltungsebenen aus Leiterbahnen, Widerständen und Dielektrika auf dem Basissubstrat und einer Verknüpfung dieser Ebenen. Sind dann die Wärmeausdehnungskoeffizienten der aufgetragenen Schaltungselemente unterschiedlich zu dem Wärmeausdehnungskoeffizienten des Substratwerkstoffes, können Spannungen in die Keramik geleitet werden, die insbesondere bei schnellem Temperaturwechsel zur Beschädigung des Bauteils oder zu dessen Zerstörung führen. Die Temperaturwechselbeständigkeit einer Substratkeramik ist daher von ganz entscheidender Bedeutung für ihre Anwendungseignung.

Keramische Substrate stellen plattenförmige Körper aus Materialien wie Aluminiumoxid, Aluminiumnitrid, Mullit, Berylliumoxid oder Siliciumcarbid dar. Aufgrund der Kombination vieler günstiger Eigenschaften hat Aluminiumoxid als guter Kompromißwerkstoff die größte Verbreitung weltweit erreicht. Bevorzugte Standardabmessungen für Aluminiumoxidsubstrate waren bis vor wenigen Jahren 50,8 x 50,8 mm, sind heute jedoch 101,6 x 101,6 mm, 114,3 x 114,3 mm oder 101,6 x 152,4 mm und es zeichnet sich für die Zukunft ein Trend zu noch größeren Substraten ab. Die Dicke dieser Substrate beträgt im allgemeinen 0,25 bis 1,3 mm. Die Substrate können geschliffen oder ungeschliffen sein. Sie können geritzt oder gekerbt sein und sie können Aussparungen unterschiedlicher Geometrie enthalten.

Die Aufgabe der vorliegenden Erfindung ist die Herstellung von keramischen Formteilen, die eine gegenüber dem Stand der Technik verbesserte Temperaturwechselbeständigkeit besitzen.

Diese Aufgabe wird durch Formteile der eingangs genannten Gattung gelöst, deren Kennzeichenmerkmale darin zu sehen sind, daß sie eine feine Porosität von höchstens 10 Vol.-% besitzen, daß sie Einschlüsse mit einem Durchmesser von ≥ 70 µm, vorzugsweise ≥ 50 µm, besonders bevorzugt ≥ 30 µm, innerhalb des keramischen Gefüges nicht enthalten und daß sie beim Eintauchen in ein schmelzflüssiges Metallbad bei einer Temperatur von wenigstens 350 °C nicht zerstört werden.

Keramische Formkörper sind in der Regel aus einer kristallinen Hauptphase, aus Poren und aus Zweitphasen aufgebaut, die sowohl kristallin als auch amorph sein können. Unter einer feinen Porosität ist erfindungsgemäß eine Porosität zu verstehen, deren mittlere Porendurchmesser im Bereich ≤ 20 µm liegen, vorzugsweise im Bereich ≤ 10 µm, wobei Makroporen mit einem Durchmesser von ≥ 50 µm, vorzugsweise ≥ 100 µm, nicht auftreten. Aluminiumoxidwerkstoffe enthalten normalerweise neben Aluminiumoxid eine Glasphase und als kristalline Zweitphase Magnesiumspinell, der sich durch chemische Reaktion von Aluminiumoxid mit magnesiumhaltigen Versatzkomponenten bildet. Inhomogene Verteilungen der Glasphase und der kristallinen Zweitphasen können ihre Ursache in einem schlechten Zerkleinerungsverhalten verwendeter Rohstoffe haben, als Beispiel ist das silicatische Mineral Talk anzuführen. Eine weitere Ursache für Inhomogenitäten kann eine schlechte Deagglomerierbarkeit eingesetzter Rohstoffe sein. Ungünstig sind hier beispeilsweise magnesiumhaltige Komponenten, wie Magnesiumoxid, das in Wasser hydratisiert und dann genauso wie die oft eingesetzten basischen Magnesiumcarbonate auch kaum mehr deagglomeriert werden kann und zu einer inhomogenen Magnesiumverteilung im Gefüge führt.

Inhomogenitäten im Keramikwerkstoff durch arteigenes Material werden oft auch durch Großkristallite und harte Agglomerate mit Durchmessern von bis zu 100 µm, oft auch mehr, hervorgerufen, die durch ein von der sie umgebenden Matrix abweichendes Schwindungsverhalten beim Sintern zu Störstellen im Gefüge führen. In Tonerderohstoffen lassen sich häufig Spuren derartiger Partikel nachweisen. Sie entstehen bei der Kalzination der Tonerden und und sind wegen ihrer sehr langen Verweilzeit im Ofen stark versintert und kaum zerkleinerbar. Artfremde, grobe Partikel, die zu Störstellen im Gefüge führen, sind häufig Absplitterungen von Mahlkörpern und Mühlenauskleidungen, die bei Mahlprozessen entstehen können.

Andere oft beobachtete Inhomogenitäten im Gefüge sind Makroporen, die Durchmesser im Bereich von 50 bis zu 200 µm und mehr besitzen können. Ihre Ursache können Lufteinschlüsse durch unvollständige Entlüftung der Schlicker, beim Sintern ausbrennbare Partikel oder in Flüssigkeiten quellbare Teilchen sein. Erfindungsgemäß soll ausgeschlossen sein, daß auch nur eine einzige Makropore innerhalb des Formteils vorhanden ist, was durch das besondere Herstellungsverfahren gewährleistet wird.

Die Herstellung von Grünkörpern mit ausreichender Formstabilität erfordert eine Zugabe von Formgebungshilfsstoffen zu den keramischen Pulvern noch vor dem Formgebungsprozeß. Als Formgebungshilfsstoffe werden zweckmäßigerweise Bindemittel, Dispergiermittel, Weichmacher und Entschäumer bezeichnet. Als Bindemittel werden üblicherweise organische Polymere eingesetzt, die aber herstellungsbedingt durch Überpolymerisation oft unlöslich gewordene oder in Flüssigkeiten quellfähige Partikel enthalten. Quellbare Binderteilchen nehmen bei der Herstellung von Gießschlickern unter beträchtlicher Volumenvergrößerung Lösemittel auf. Bei der Trocknung des Schlickers während der Formung des Grünkörpers geben die gequollenen Binderteilchen das aufgenommene Lösemittel wieder ab, schrumpfen auf ihre ursprüngliche Größe und hinterlassen im Grünkörper Riesenporen, die sich beim späteren Sintern nicht mehr schließen.

Es wurde überraschend gefunden, daß nicht nur die mechanische, wie bekannt, sondern auch die thermische Belastbarkeit eines keramischen Werkstoffes von der Homogenität des Gefüges abhängig ist. Die thermische Belastbarkeit wird reduziert durch eine ungleichmäßige Verteilung von Zweitphasen und durch Inhomogenitäten, wie Riesenkörner, versinterte Agglomerate, Fremdeinschlüsse oder Makroporen.

Eine verbesserte thermische Belastbarkeit keramischer Formkörper bei schroffen Temperaturwechseln wird erfindungsgemäß dadurch erreicht, daß die Zweitphasen innerhalb des keramischen Gefüges homogener verteilt werden. Die homogenere Verteilung gelingt durch die Auswahl geeigneter, als Sinteradditiv eingesetzter Rohstoffe im Hinblick auf deren chemische Reinheit, Teilchengröße und ihr Zerkleinerungsverhalten sowie durch vollständigere Aufbereitung schwer zerkleinerbarer oder schlecht deagglomerierbarer Rohstoffe. Zur Vermeidung von Makroporen im Werkstoff werden erfindungsgemäß für die Herstellung keramischer Massen insbesondere solche polymeren Bindemittel eingesetzt, die quellbare Polymerisate gar nicht oder nur in Spuren und in einer Größe enthalten, die noch unschädlich ist. Inhomogenitäten wie Riesenkörner, Agglomerate, Mahlsplitter oder sonstige Verunreinigungen werden durch vollständige Selektion aus der aufbereiteten Masse kurz vor dem Formgebungsschritt entfernt.

Zur Herstellung der erfindungsgemäßen Formkörper wird zunächst handelsübliche Tonerde mit dem Gehalt an Al₂O₃ von mindestens 98 % in einer geeigneten Mühle auf eine mittlere Korngröße aufgemahlen, die vorzugsweise nahe der mittleren Primärteilchengröße des Aluminiumoxidpulvers im Bereich von 0,2 bis 6 µm liegt. Als Sinterhilfsmittel benötigte Substanzen, die Anteile an MgO, SiO₂ und CaO liefern, können bereits vor dem Mahlvorgang zugegeben werden. Für eine gute Verteilung der Sinterhilfsmittel im Aluminiumoxid ist es aber vorteilhafter, wenn diejenigen Sinteradditive, die während der Aluminiumoxidmahlung nicht ausreichend zerkleinert oder deagglomeriert werden oder die während der Aluminiumoxidaufbereitung schwer deagglomerierbare Komponenten bilden, separat gemahlen und erst vor oder während der Dispergierung zu dem fertig gemahlenen Aluminiumoxid zugegeben werden. Als Sinterhilfsmittel kommen zunächst alle Minerale in Frage, die beim anschließenden Sintern Magnesiumoxid, Calciumoxid oder Siliciumoxid liefern. Beispiele für derartige Minerale sind Talk, Kaolin, Magnesiumcarbonat, Kalkspat, Quarz oder Dolomit. Herkunftsbedingt enthalten diese Minerale häufig unerwünschte Fremdstoffe und Beimengungen, so daß die Verwendung synthetischer Produkte höherer chemischer Reinheit als Sinterhilfsmittel erfindungsgemäß bevorzugt ist.

Die Mahlung der Tonerde, gegebenenfalls zusammen mit einem Teil der Sinterhilfsmittel, erfolgt in wäßriger Suspension. Nach dem Mahlen wird das Wasser entfernt, vorzugsweise durch Sprühtrocknen. Arbeitet man im wäßrigen System weiter, kann auch schon eine bloße Reduzierung des Wassergehaltes durch Entwässern, vorzugsweise über eine Filterpresse, ausreichend sein. Das gemahlene und getrocknete Pulver wird sodann in bekannter Weise in Lösemitteln unter Zusatz von Dispergiermitteln, Bindemitteln, Weichmachern und gegebenenfalls Entschäumern durch einen weiteren Mahlschritt zu einer Dispersion verarbeitet. Der Dispergiervorgang selbst erfolgt vorzugsweise zweistufig, wobei das sprühgetrocknete Pulver zunächst nur in den Lösemitteln und dem Dispergiermittel dispergiert wird. Bei diesem Verfahrensschritt werden auch die getrennt aufbereiteten Sinterhilfsmittel zugesetzt und mit den keramischen Pulvern innig vermengt. In einem zweiten Schritt erfolgt dann die Zugabe der Bindemittel und eventuell anderer Additive.

Der auf diese Weise erhaltene Schlicker wird nach an sich bekannten Verfahren entlüftet und durch eine geeignete Trennvorrichtung, wie zum Beispiel ein Sieb mit einer definierten Maschenweite oder einen Filter, von Verunreinigungen schädlicher Größe befreit und nach üblichen Formgebungsverfahren weiterverarbeitet. Dies kann beispielsweise durch Eingießen in eine Gipsform oder durch Vergießen zu einem Band oder einer Folie erfolgen, woraus nach Abtrocknung des Schlickers Bauteile gestanzt werden. Die nach der Formgebung erhaltenen Grünkörper werden anschließend unter üblichen Bedingungen bei 1500 bis 1600 °C gesintert.

Die Temperaturwechselbeständigkeit der gesinterten Formkörper prüft man dann derart, daß man an eine ausreichende Anzahl von Prüfkörpern geeigneter Größe einen ausreichend steilen Temperaturgradienten anlegt, dieses Gradientenfeld zumindest teilweise über die Prüfkörperfläche bewegt und die Zahl der Prüfkörper erfaßt, die bei diesem Vorgang durch Bruch versagen. Eine derartige Prüfung auf Temperaturwechselbeständigkeit kann, beispielsweise in Anlehnung an die Lehre der DE-A-41 39 166, so erfolgen, daß Prüfkörper auf Raumtemperatur, vorzugsweise in einer Gruppe von jeweils zehn Prüfkörpern, mit einer konstanten Eintauchgeschwindigkeit in ein Bad mit heißem, schmelzflüssigem Metall mindestens bis zu einer Tiefe von 40 mm eingetaucht werden, und daß dann die Zahl der Prüfkörper ermittelt wird, die während der Belastung zerstört wurden. Zur Verbesserung der Aussagegenauigkeit werden die intakt gebliebenen Prüfkörper nach dem Abkühlen an Luft auf Raumtemperatur um 90 ° gedreht und erneut belastet, bis schließlich jeder unzerstört gebliebene Prüfkörper wenigstens viermal geprüft worden ist.

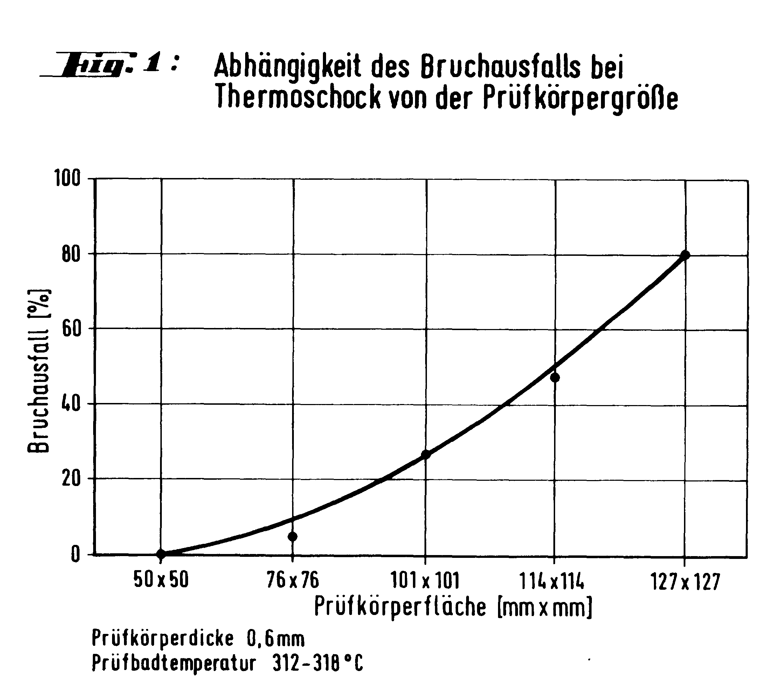

Die Abbildung 1 zeigt, wie die Bruchempfindlichkeit bei thermischer Belastung von identisch hergestellten Prüfkörpergruppen bei konstant gehaltenen Prüfbedingungen von der Prüfkörpergeometrie beziehungsweise von der jeweils belasteten Prüfkörperfläche abhängt.

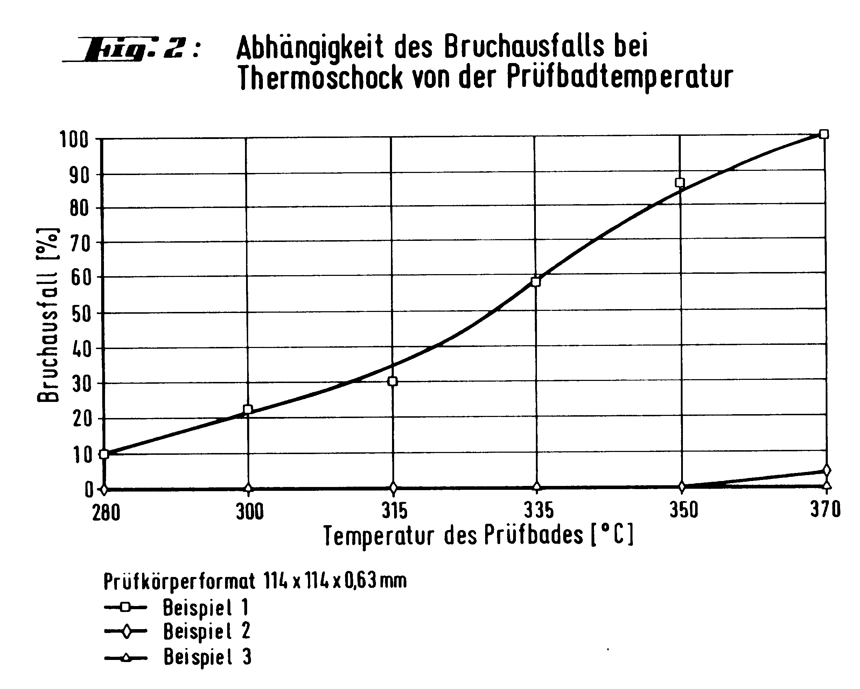

In Abbildung 2 ist die Bruchquote von Prüfkörpern gleicher Geometrie und ihre Abhängigkeit von der angelegten Temperaturdifferenz, also der Temperatur des schmelzflüssigen Metalls im Prüfbad aufgezeigt.

Soll die Temperaturwechselbeständigkeit von zwei Materialvarianten verglichen werden, so verwendet man Prüfkörper mit jeweils gleichem Bearbeitungszustand der Oberflächen und gleicher Bauteilgeometrie, hält die Versuchsbedingungen konstant und wählt die Temperatur des Prüfbades derart, daß bei der Prüfung von zehn Teilen der empfindlicheren Variante zumindest ein Prüfkörper durch Bruch ausfällt. Stehen für die Thermoschockprüfung nur Bauteile unterschiedlicher Geometrie zur Verfügung, so besteht die Möglichkeit, durch geeignete mechanische Bearbeitung, wie beispielsweise Schneiden mittels Laser oder Sägen mit Diamantwerkzeugen, Prüfkörper gleicher Größe zu gewinnen und zu prüfen. Es ist ferner selbstverständlich, daß die Belastbarkeit von Formkörpern mit Bohrungen, Kerben und Laserritz- oder Laserschnittlinien bei der Thermoschockeinwirkung niedriger als bei glattflächigen Prüfkörpern ist, und daß die Prüfbedingungen entsprechend anzupassen sind.

Die erfindungsgemäßen, keramischen Formkörper zeichnen sich nun durch eine deutlich erhöhte Überlebenswahrscheinlichkeit bei Temperaturwechselbelastung aus, wodurch sich ihre besondere Eignung für Verwendungszwecke wie die Herstellung von Substraten in der Dünn- und Dickfilmtechnik und die Herstellung von Multilayern, wie beispielsweise Chip-Gehäuse, durchströmbare Kühlkörper bzw. Heizkörper, Heizleiter und sonstige metallisierte und nicht metallisierte Multilayer ergibt.

### Beispiel 1 (Vergleichsbeispiel)

In einer Trommelmühle, gefüllt mit 2000 Gew.-Teilen Mahlkörpern (Zylinder: ⌀ 20 mm) werden 1708 Gew.-Teile einer Mischung verschiedener Tonerden mit durchschnittlichen Primärkristallitgrößen von 2,2 bis 3,2 µm und spezifischen Oberflächen von 0,5 bis 0,8 m²/g mit 37,8 Gew.-Teilen Talk, 36 Gew.-Teilen Kaolin, 11 Gew.-Teilen basischem Magnesiumcarbonat und 7,2 Gew.-Teilen Wollastonit in 1100 Vol.-Teilen Wasser derart aufgemahlen, daß sich im Mahlschlicker eine durchschnittliche Korngröße von 2,6 bis 3,0 µm einstellt. Der Schlicker wird anschließend sprühgetrocknet. Die Korngrößenverteilung wird nach dem Prinzip der Laserlichtstreuung mit dem Laser Granulometre Cilas HR 850 bestimmt, wobei die Pulverteilchen vor der Messung zusammen mit 0,4 %-iger Natriumpolyphosphatlösung eine Minute unter Ultraschalleinwirkung in Wasser dispergiert werden.

In einer Trommelmühle, gefüllt mit 240 Gew.-Teilen Mahlkörper (Zylinder: ⌀ 20 mm), werden 600 Gew.-Teile des Sprühgranulats in 176 Gew.-Teilen eines Lösemittelgemisches aus Trichlorethen und Ethanol, dem 6 Gew.-Teile Fischöl zugesetzt sind, über eine Zeitspanne von insgesamt 23 h dispergiert. In einem zweiten Schritt werden 36,4 Gew.-Teile einer Mischung aus Polyvinylbutyral, Dioctylphthalat und Polyglykol in die Trommelmühle zugegeben, dann werden weitere 23 h gemahlen. Eine Teilchengrößenanalyse über Lichtstreuungsmessung (HIAC) ergab bei der hier eingesetzten Charge bezüglich unlöslicher Partikel in 50 ml einer 10 prozentigen Lösung von Polyvinylbutyral in Ethanol 44 Teilchen mit einem Durchmesser d von 90 ≤ d ≤ 140 µm im Lösungsvolumen.

Die Viskosität des derart aufbereiteten Gießschlickers beträgt in der Mahltrommel ca. 9000 mPa·s, gemessen bei 20 °C mit einem Rotationsviskosimeter. Der Schlicker wird entlüftet und über ein Siebgewebe mit einer Maschenweite von mindestens 150 µm filtriert, dann auf ein mit einem Trennmittel benetztes Endlosstahlband bei einer Bandgeschwindigkeit von 0,75 m/min aufgetragen und zu einem Band mit einer Trockendicke von 0,74 mm geformt. Der Schlicker wird dann im Gegenstromprinzip in einem von ca. 20 °C auf ca. 80 °C steigenden Temperaturgradientenfeld zu einer grünen Keramikfolie getrocknet, die anschließend in Streifen geschnitten und auf Rollen gewickelt wird. Die so erhaltene grüne Keramikfolie wurde unter dem Mikroskop im Durchlicht geprüft. Dabei stellte sich heraus, daß vorwiegend auf der der Stahlbandseite zugewandten Unterseite der Gießfolie artfremde Partikel mit Durchmessern von zum Teil deutlich > 100 µm in einer Konzentration von 1 Teilchen pro 10 cm² auftraten. Die chemische Analyse der herauspräparierten Partikel zeigte, daß es sich um Absplitterungen von Mahlkörpern handelte.

Aus den Folienstreifen werden durch Stanzen die Grünkörper geformt, die mit einem wenig reaktiven, oxidischen Granulat als Trennmittel beschichtet und mehrlagig bei 1590 °C gesintert werden. Nach dem Sintern werden die abgekühlten Formkörper vereinzelt, das Trennpulver abgebürstet und die Teile gewaschen.

Zur Prüfung der Temperaturwechselbeständigkeit werden nun 50 Prüfkörper in der Abmessung 114 x 114 x 0,63 mm mit einer konstanten Eintauchgeschwindigkeit von 1,5 mm/s in geschmolzenes Lot der Zusammensetzung 63% Sn, 37% Pb mit einer Temperatur von mindestens 312 °C höchstens jedoch 318 °C bis zu einer Eintauchtiefe von 40 mm eingetaucht. Danach werden die unzerstört gebliebenen Prüflinge an Luft auf Raumtemperatur abgekühlt und noch dreimal unter gleichen Bedingungen eingetaucht, wobei die Prüfkörper vor jeder weiteren Prüfung jeweils um einen Winkel von 90 ° gedreht werden. Der Gesamtausfall durch Bruch bei Thermoschockeinwirkung beträgt über alle vier Prüfschritte 30 %. Die mikroskopische Untersuchung (REM) der Bruchflächen von durch Thermoschock zerstörten Prüfkörpern zeigte bei mehr als 80 % der Prüfkörper Makroporen mit einem Durchmesser von ≧ 100 µm im Bruchzentrum.

### Beispiel 2 (erfindungsgemäß):

In einer Trommelmühle werden 1707 Gew.-Teile einer Mischung aus Tonerden mit durchschnittlichen Primärkorngrößen von 2,4 bis 3,2 µm und spezifischen Oberflächen von 0,5 bis 0,8 m²/g mit 85 Gew.-Teilen Kaolin und 8 Gew.-Teilen Calciumcarbonat mit einer mittleren Teilchengröße von 0,25 bis 0,40 µm unter Zusatz von 2000 Gew.-Teilen Mahlkörper (Zylinder: ⌀ 20 mm) und 1200 Gew.-Teilen Wasser derart aufgemahlen, daß sich im Mahlschlicker eine Korngrößenverteilung mit einem d₅₀-Wert von 2,7 bis 3,0 µm einstellt. Der erhaltene Schlicker wird zur Entfernung des Wassers sprühgetrocknet.

Parallel werden in einer Trommelmühle, gefüllt mit 30 Gew.-Teilen Mahlkörpern (Zylinder: ⌀ 20 mm), 20 Gew.-Teilen geglühtem Magnesiumoxid mit einer durchschnittlichen Agglomeratgröße von 35 bis 40 µm zusammen mit 37 Gew.-Teilen Trichlorethen so lange aufgemahlen, bis sich eine durchschnittliche Korngröße d₅₀ von maximal 0,8 µm einstellt.

In einer Trommelmühle, gefüllt mit 240 Gew.-Teilen Mahlkörpern (Zylinder: ⌀ 20 mm), werden 600 Gew.-Teile Sprühkorn mit 9,5 Gew.-Teilen der Suspension aus feinzerkleinertem Magnesiumoxid in Trichlorethen in 174 Gew.-Teilen einer Lösemittelmischung aus Ethanol und Trichlorethen, unter Zusatz von 6 Gew.-Teilen Fischöl, über einen Zeitraum von mindestens 23 h dispergiert. Anschließend werden 36,4 Gew.-Teile einer Mischung von Polyvinylbutyral, Dioctylphtalat und Polyglykol in die Trommelmühle zu den dispergierten Pulvern zugefügt, und es wird weitere 23 h gemahlen. Das als Binder eingesetzte Polyvinylbutyral wird derart ausgewählt, daß bei Filtration einer Lösung von 10 g Polyvinylbutyral in 90 g Ethanol über ein Sieb mit einer Maschenweite von 35 µm nicht mehr als 5 gequollene Binderteilchen in einer Größe von mehr als 100 µm als Siebrückstand verbleiben. Eine Teilchengrößenanalyse über Lichtstreuungsmessung (HIAC) ergab bei der hier ausgewählten Polyvinylbutyralcharge bezüglich unlöslicher Partikel in 50 ml einer 5 prozentigen Lösung von Polyvinylbutyral in Ethanol nur 3 Teilchen mit einem Durchmesser d im Bereich von 90 ≤ d ≤ 100 µm im Lösungsvolumen.

Die Viskosität eines derart hergestellten Gießschlickers beträgt in der Mahltrommel 9000 - 10 000 mPa·s, gemessen bei 20 °C (Rotationsviskosimeter). Der Schlicker wird entgast und über einen Filter von Partikeln ≥ 70 µm befreit, bevor er auf einem mit Trennmittel benetzten Endlosstahlband bei einer Geschwindigkeit von 0,75 m/min aufgetragen und zu einem Band mit einer Trockendicke von 0,74 mm geformt wird. Der weitere Verfahrensablauf mit Herstellung der Grünkörper und deren Sinterung folgt dem im Beispiel 1 dargelegten Weg.

Zur Prüfung der Temperaturwechselbeständigkeit werden wiederum 50 Prüfkörper in der Abmessung 114 x 114 x 0,63 mm mit einer konstanten Eintauchgeschwindigkeit von 1,5 mm/s in ein schmelzflüssiges Lot der Zusammensetzung 63% Sn, 37% Pb bis zu einer Eintauchtiefe von 40 mm eingetaucht, wobei die Temperatur des Lotbades mindestens 347 °C jedoch höchstens 353 °C beträgt. Die unzerstört gebliebenen Prüfkörper werden an Luft auf Raumtemperatur abgekühlt und noch dreimal unter gleichen Bedingungen geprüft, wobei die Prüfkörper vor jeder weiteren Prüfung jeweils um einen Winkel von 90 ° gedreht werden. Der Gesamtausfall durch Bruch bei Thermoschock beträgt über alle vier Prüfschritte 0 %.

Zur nochmaligen Prüfung der Temperaturwechselbeständigkeit werden wiederum 50 Prüfkörper in der Abmessung 114 x 114 x 0,63 mm mit einer konstanten Eintauchgeschwindigkeit von 1,5 mm/s in ein schmelzflüssiges Lot der Zusammensetzung 63% Sn, 37% Pb bis zu einer Eintauchtiefe von 40 mm eingetaucht, wobei die Temperatur des Lotbades weiter erhöht ist und mindestens 367 °C jedoch höchstens 373 °C beträgt. Die unzerstört gebliebenen Prüfkörper werden an Luft auf Raumtemperatur abgekühlt und noch dreimal unter gleichen Bedingungen geprüft, wobei die Prüfkörper vor jeder weiteren Prüfung jeweils um einen Winkel von 90 ° gedreht werden. Der Gesamtausfall durch Bruch bei Thermoschock beträgt über alle vier Prüfschritte 4 %.

Die mikroskopische Analyse der Bruchflächen ergab, daß im Bruchzentrum häufig große Spinellkristallite zu identifizieren waren, deren Entstehung auf unzureichende Desagglomerierung des Magnesiumoxids zurückzuführen ist.

### Beispiel 3 (erfindungsgemäß):

In einer Trommelmühle werden 1744 Gew.-Teile einer Mischung verschiedener Tonerden mit einer durchschnittlichen Primärkorngröße von 2,4 bis 3,2 µm und einer spezifischen Oberfläche von 0,5 bis 0,8 m²/g gemeinsam mit 52 Gew.-Teilen Quarzfeinstmehl mit einer mittleren Teilchengröße von 1,9 bis 2,1 µm und 8 Gew.-Teilen Calciumcarbonat mit einer mittleren Teilchengröße von 0,25 bis 0,40 µm unter Zusatz von 2000 Gew.-Teilen Mahlkörpern (Zylinder: ⌀ 20 mm) und 1100 Gew.-Teilen Wasser aufgemahlen, bis sich eine Korngrößenverteilung von d₅₀ = 2,6 bis 2,8 µm im Mahlschlicker einstellt. Der erhaltene Schlicker wird sprühgetrocknet.

Parallel wird eine Suspension von geglühtem Magnesiumoxid in Ethanol mit einem Wassergehalt von max. 0,1 Gew.-% und mit einem Feststoffgehalt von 20 Gew.-% hergestellt. Diese Suspension wird in einer Rührwerkskugelmühle mit Zirkonoxidmahlkörpern (Kugeln: ⌀ = 0,6 bis 1 mm) solange gemahlen, bis das Magnesiumoxid einen mittleren Korndurchmesser von 0,4 bis 0,5 µm aufweist, und anschließend über einen 10 µm-Filter filtriert.

In einer Trommelmühle, gefüllt mit 240 Gew.-Teilen Mahlkörpern (Zylinder: ⌀ 20 mm) werden 163 Gew.-Teile eines Lösungsmittelgemisches aus Trichlorethen und Ethanol mit Zusatz von 6 Gew.-Teilen Fischöl vorgelegt. Hierzu gibt man 16,5 Gew.-Teile der Suspension aus feinstgemahlenem und filtriertem Magnesiumoxid in Ethanol und mischt bei langsamer Drehung der Mahltrommel (≤ 10 rpm) über eine Zeit von wenigstens 10 h. Dann werden 600 Gew.-Teile des Sprühgranulats zugesetzt und es wird 23 h gemahlen. Schließlich gibt man 36,4 Gew.-Teile einer Mischung aus Polyvinylbutyral, Polyglykol und Dioctylphtalat in die Trommelmühle zu den dispergierten Pulvern und mahlt weitere 23 h. Das zur Gießschlickerherstellung verwendete Polyvinylbutyral erfüllt bezüglich quellfähiger Partikel die in Beispiel 2 dargelegten Anforderungen.

Die Viskosität des auf diese Weise hergestellten Schlickers beträgt in der Mahltrommel 8500 bis 10 000 mPa·s, gemessen bei 20 °C (Rotationsviskosimeter). Der Schlicker wird dann entgast und mit Hilfe eines Siebes von restlichen Partikeln mit einem Durchmesser von ≥ 30 µm befreit. Die weitere Verarbeitung des Schlickers zu den fertigen Formteilen geschieht wie in Beispiel 2 beschrieben.

Bei der Prüfung auf Temperaturwechselbeständigkeit, die genauso wie in Beispiel 2 beschrieben durchgeführt wurde, betrug der Bruchausfall von Formteilen der Abmessung 114 x 114 x 0,63 über vier Prüfschritte bei beiden Temperaturen 0 %.

## Patentansprüche

1. Dichtgesintertes, plattenförmiges keramisches Formteil aus Aluminiumoxid mit verbesserter Temperaturwechselbeständigkeit, dadurch gekennzeichnet, daß es eine feine Porosität von höchstens 10 Vol.-% besitzt, daß es Einschlüsse mit einem Durchmesser von ≥ 70 µm innerhalb des keramischen Gefüges nicht enthält und daß es beim Eintauchen in ein schmelzflüssiges Metallbad mit einer Temperatur von wenigstens 350 °C nicht zerstört wird.

2. Keramisches Formteil nach Anspruch 1, dadurch gekennzeichnet, daß es Einschlüsse mit einem Durchmesser von ≥ 50 µm, vorzugsweise von ≥ 30 µm, innerhalb des keramischen Gefüges nicht enthält und daß es beim Eintauchen in ein schmelzflüssiges Metallbad mit einer Temperatur von wenigstens 370 °C nicht zerstört wird.

3. Keramisches Formteil nach Anspruch 1 oder 2, dadurch gekennzeichnet, daß es eine Dicke im Bereich von 0,2 bis 5 mm besitzt.

4. Keramisches Formteil nach einem der Ansprüche 1 bis 3, dadurch gekennzeichnet, daß es zusätzlich MgO in einer Menge im Bereich von 0,1 bis 5 Gew.-% enthält, vorzugsweise von 0,4 bis 1,3 Gew.-%.

5. Keramisches Formteil nach einem der Ansprüche 1 bis 4 dadurch gekennzeichnet, daß es zusätzlich CaO in einer Menge im Bereich von 0,1 bis 5 Gew.-% enthält, vorzugsweise von 0,15 bis 0,3 Gew.-%.

6. Keramisches Formteil nach einem der Ansprüche 1 bis 5 dadurch gekennzeichnet, daß es zusätzlich SiO₂ in einer Menge im Bereich von 0,1 bis 8 Gew.-% enthält, vorzugsweise von 1,5 bis 3,2 Gew.-%.

7. Verfahren zur Herstellung eines dichtgesinterten, plattenförmigen keramischen Formteils aus Aluminiumoxid mit verbesserter Temperaturwechselbeständigkeit, bei dem keramisches Pulver gemahlen, zu einem Schlicker weiterverarbeitet, zum plattenförmigen Formteil geformt und danach gesintert wird, dadurch gekennzeichnet, daß das keramische Pulver auf eine mittlere Korngröße d₅₀ im Bereich von 1,2 bis 4,5 µm gemahlen wird, daß wenigstens ein Teil der Sinteradditive auf eine mittleren Größe d₅₀ im Bereich von 0,1 bis 1,1 µm gemahlen wird, daß danach Formgebungshilfsstoffe zugesetzt werden, die im Schlicker quellbare Bestandteile nicht enthalten, daß aus dem Schlicker alle Teilchen einer Größe von ≥ 70 µm entfernt werden, daß danach die Formgebung durch Foliengießen, Schlickergießen oder Druckgießen erfolgt und daß bei Temperaturen im Bereich von 1400 bis 1800 °C gesintert wird.

8. Verfahren nach Anspruch 7, dadurch gekennzeichnet, daß das keramische Pulver auf eine mittlere Korngröße d₅₀ im Bereich von 2,6 bis 3,1 µm gemahlen wird, daß wenigstens ein Teil der Sinteradditive auf eine mittlere Größe d₅₀ im Bereich von 0,4 bis 0,7 µm in einem inerten Medium gemahlen wird, daß aus dem Schlicker alle Teilchen einer Größe von ≥ 50 µm, vorzugsweise ≥ 30 µm, entfernt werden, daß danach die Formgebung durch Foliengießen erfolgt und daß bei Temperaturen im Bereich von 1500 bis 1600 °C gesintert wird.

9. Verwendung eines plattenförmigen keramischen Formteils nach einem der Ansprüche 1 bis 6, hergestellt nach einem Verfahren gemäß Anspruch 7 oder 8 als Substrat für elektrische Schaltungen in der Dickfilmtechnik.

10. Verwendung eines plattenförmigen keramischen Formteils nach einem der Ansprüche 1 bis 6, hergestellt nach einem Verfahren gemäß Anspruch 7 oder 8 für die Herstellung von Multilayern.

## Claims

1. A densely sintered tabular ceramic part of aluminum oxide having improved thermal shock resistance, which possesses a fine porosity of at most 10% by volume, does not contain inclusions having a diameter of ≥ 70 µm within the ceramic microstructure and is not destroyed on immersion in a molten metal bath having a temperature of at least 350°C.

2. A shaped ceramic part as claimed in claim 1, which does not contain inclusions having a diameter of ≥ 50 µm, preferably ≥ 30 µm, within the ceramic microstructure and is not destroyed on immersion in a molten metal bath having a temperature of at least 370°C.

3. A shaped ceramic part as claimed in claim 1 or 2, which possesses a thickness in the range from 0.2 to 5 mm.

4. A shaped ceramic part as claimed in any one of claims 1 to 3, which additionally contains MgO in an amount in the range from 0.1 to 5% by weight, preferably from 0.4 to 1.3% by weight.

5. A shaped ceramic part as claimed in any one of claims 1 to 4, which additionally contains CaO in an amount in the range from 0.1 to 5% by weight, preferably from 0.15 to 0.3% by weight.

6. A shaped ceramic part as claimed in any one of claims 1 to 5, which additionally contains SiO₂ in an amount in the range from 0.1 to 8% by weight, preferably from 1.5 to 3.2% by weight.

7. A process for producing a densely sintered tabular shaped ceramic part of aluminum oxide having improved thermal shock resistance, in which ceramic powder is milled, processed further into a slip, shaped into tabular shaped parts and then sintered, which process comprises milling the ceramic powder to an average particle size d₅₀ in the range from 1.2 to 4.5 µm, milling at least part of the sintering additives to an average size d₅₀ in the range from 0.1 to 1.1 µm, then adding shaping aids which do not contain components which can swell in the slip, removing all particles having a size of ≥ 70 µm from the slip, then carrying out shaping by sheet casting, slip casting or pressure casting and sintering at temperatures in the range from 1400 to 1800°C.

8. The process as claimed in claim 7, wherein the ceramic powder is milled to an average particle size d₅₀ in the range from 2.6 to 3.1 µm, at least part of the sintering additives is milled to an average size d₅₀ in the range from 0.4 to 0.7 µm in an inert medium, all particles having a size of ≥ 50 µm, preferably ≥ 30 µm, are removed from the slip, shaping is then carried out by sheet casting and the shaped part is sintered at temperatures in the range from 1500 to 1600°C.

9. A method of using a tabular shaped ceramic part as claimed in any one of claims 1 to 6, produced by a process as claimed in claim 7 or 8, as substrate for thick-film electric circuits.

10. A method of using a tabular shaped ceramic part as claimed in any one of claims 1 to 6, produced by a process as claimed in claim 7 or 8, for the production of multilayers.

## Revendications

1. Pièce céramique sous forme de panneau frittée à densité maximale en oxyde d'aluminium ayant une résistance au choc thermique améliorée, caractérisée en ce qu'elle a une porosité fine de tout au plus 10 % en volume, en ce qu'elle ne comporte pas d'inclusions d'un diamètre ≥ 70 µm dans la texture céramique et en ce que lors de la trempe dans un bain métallique liquide en fusion ayant une température d'au moins 350 °C, elle n'est pas détruite.

2. Pièce céramique selon la revendication 1, caractérisée en ce qu'elle ne contient pas d'inclusions ayant un diamètre ≥ 50 µm, de préférence de ≥ 30 µm dans la texture céramique et en ce qu'elle n'est pas détruite lors de la trempe dans un bain métallique liquide en fusion ayant une température d'au moins 370 °C.

3. Pièce céramique selon la revendication 1 ou 2, caractérisée en ce qu'elle a une épaisseur dans l'intervalle de 0,2 à 5 mm.

4. Pièce céramique selon l'une des revendications 1 à 3, caractérisée en ce qu'elle contient de plus du MgO dans une quantité dans l'intervalle de 0,1 à 5 % en poids, de préférence de 0,4 à 1,3 % en poids.

5. Pièce céramique selon l'une des revendications 1 à 4, caractérisée en ce qu'elle contient de plus du CaO dans une quantité dans l'intervalle de 0,1 à 5 % en poids, de préférence de 0,15 à 0,3 % en poids.

6. Pièce céramique selon l'une des revendications 1 à 5, caractérisée en ce qu'elle contient de plus du SiO₂ dans une quantité dans l'intervalle de 0,1 à 8 % en poids, de préférence de 1,5 à 3,2 % en poids.

7. Procédé pour la préparation d'une pièce céramique sous forme de panneau fritté à densité maximale en oxyde d'aluminium ayant une résistance améliorée aux chocs thermiques, dans lequel on broie la poudre céramique, on la transforme en une barbotine, on moule pour obtenir une pièce sous forme de panneau et ensuite on fritte, caractérisé en ce que la poudre céramique est broyée à une granulométrie moyenne d₅₀ dans l'intervalle de 1,2 à 4,5 µm, en ce qu'au moins une partie des additifs de frittage sont broyés à une taille moyenne d₅₀ dans l'intervalle de 0,1 à 1,1 µm, en ce que l'on ajoute ensuite des adjuvants de moulage, qui ne contiennent pas de composants gonflables dans la barbotine, en ce que l'on élimine de la barbotine toutes les particules d'une taille ≥ 70 µm, en ce que l'on effectue ensuite la mise en forme par coulée en feuille, coulée de barbotine ou coulée sous pression et en ce que l'on fritte à des températures dans l'intervalle de 1400 à 1800 °C.

8. Procédé selon la revendication 7, caractérisé en ce que l'on broie la poudre céramique à une granulométrie moyenne d₅₀ dans l'intervalle de 2,6 à 3,1 µm, en ce qu'au moins une partie des additifs de frittage sont broyés à une granulométrie moyenne d₅₀ dans l'intervalle de 0,4 à 0,7 µm, dans un milieu inerte, en ce que l'on élimine de la barbotine toutes les particules d'une taille ≥ 50 µm, de préférence ≥ 30 µm, en ce que l'on effectue ensuite la mise en forme par coulée en feuille et en ce que l'on fritte à des températures dans l'intervalle de 1500 à 1600 °C.

9. Utilisation d'une pièce céramique en forme de panneau selon l'une des revendications 1 à 6, préparée selon le procédé selon la revendication 7 ou 8 comme substrat pour des circuits de commutation électriques dans la technique des films épais.

10. Utilisation d'une pièce céramique en forme de panneau selon l'une des revendications 1 à 6 préparée selon un procédé selon la revendication 7 ou 8 pour la préparation de multicouches.
